# EUROPÄISCHE PATENTSCHRIFT

(11) **EP 1 137 518 B1**
(45) Veröffentlichungstag und Bekanntmachung des Hinweises auf die Patenterteilung: **09.04.2003**
(21) Anmeldenummer: 00967648.7
(22) Anmeldetag: 06.09.2000
(51) Int. Cl.: B26D 7/06, B26D 3/18

(54) **GERÄT ZUM SCHNEIDEN VON KNOBLAUCH IN WÜRFELN**
DEVICE FOR DICING GARLIC
APPAREIL SERVANT A COUPER DE L'AIL EN DES

(30) Priorität: 07.10.1999 DE 19948168
(43) Veröffentlichungstag der Anmeldung: 04.10.2001
(73) Patentinhaber: Repac, Petra, 65611 Brechen (DE)
(72) Erfinder: REPAC, Cedomir, 65611 Brechen (DE); CULIG, Branko, 8330 Metlika (SI)
(74) Vertreter: Müller, Eckhard, Dr.
(86) Internationale Anmeldenummer: EP0008674
(87) Internationale Veröffentlichungsnummer: WO01024978

(56) Entgegenhaltungen:
- DE-C- 19 805 933
- DE-U- 1 750 135

## Beschreibung

Die Erfindung betrifft ein Gerät zum Schneiden von Knoblauch, Zwiebeln oder dergleichen Gemüse mit einem Innenteil, welches einen Aufnahmeraum mit einem einends angeordneten Schneidgitter für das zu schneidende Gut aufweist, mit einem, einen Stempel aufweisenden Gehäuseoberteil, mit dem der Aufnahmeraum anderenends verschließbar ist, mit einem ein Messer aufweisenden Gehäusekörper, in dem das Innenteil drehbar aufgenommen ist und mit Gewindemitteln, die in Folge einer Verdrehung des Gehäuseoberteils den Stempel in den Aufnahmeraum des mitdrehenden Innenteils hinein oder aus diesem heraus fahren lassen, wobei die Gewindemittel mittels Verstellmitteln in Eingriff oder außer Eingriff bringbar sind.

Aus der DE 198 05 933 C 1 ist ein Knoblauchschneider mit den eingangs genannten Merkmalen bekannt. Dieser Knoblauchschneider weist einen Gehäusekörper auf, der an seiner Unterseite ein Messer trägt. Weiterhin ist ein Oberteil mit daran befestigtem Stempel vorgesehen, der im Betriebszustand beim Verdrehen gegenüber dem Gehäusekörper eine Axialbewegung gegen ein mitrotierendes Schneidgitter durchführt. Damit der Knoblauchschneider nach Befüllung schneller in Betrieb gesetzt werden kann, die Frucht schonend zerkleinert wird und der Knoblauchschneider auch schnell wieder geöffnet und gereinigt werden kann, ist ein den Knoblauch aufnehmender Innenkörper vorgesehen, der drehbar im Gehäusekörper gelagert ist. Der Innenkörper besitzt ein Schneidgitter, wobei ein an einer Spindel angeordneter Stempel in den Innenkörper eintaucht. Der Knoblauchschneider ist des weiteren mit Verstellmitteln ausgestattet, die im Betriebszustand für einen Eingriff in die Spindel sorgen und im Öffnungszustand eine freie Längsverschiebung der Spindel zulassen. Die Mittel sind als eine auf dem Gehäusekörper angeordnete Überwurfmutter ausgebildet, welche ein Gegengewinde für die Spindel aufweist. Die Überwurfmutter ist mittels eines Bajonettverschlusses am Gehäusekörper befestigt. Das Gegengewinde ist an der Innenseite eines Sprengringes angeordnet, der durch die Überwurfmutter im Betriebszustand mit dem Gewinde der Spindel in Eingriff und im Öffnungszustand außer Eingriff gebracht wird. Durch diese Maßnahme kann der Stempel rasch in die Arbeitsstellung unmittelbar oberhalb des zu schneidenden Gutes gebracht werden. Anschließend wird die Überwurfmutter verrastet und der Stempel durch Verdrehen des Oberteils auf das zu schneidende Gut zugeführt, wodurch das Gut durch das Schneidgitter und das Messer zerschnitten wird. Zum raschen Öffnen wird die Überwurfmutter wieder entrastet, so daß der Stempel rasch entfernt und der Knoblauchschneider gereinigt werden kann. Obwohl sich dieser Knoblauchschneider in der Praxis sehr gut bewährt hat, besteht Bedarf nach einer weiteren Verbesserung.

Der Erfindung liegt die Aufgabe zugrunde, ein Gerät zum Schneiden von Knoblauch oder dergleichen Gemüse mit den eingangs genannten Merkmalen insoweit weiterzubilden, daß dieses bei konstruktiv einfachem Aufbau einfach und schnell gehandhabt wie auch gereinigt werden kann.

Diese Aufgabe wird nach der Erfindung bei dem Gerät mit den eingangs genannten Merkmalen dadurch gelöst, daß das Verstellmittel axial verschiebbar am Gehäuseoberteil angeordnet ist und in einer ersten axialen Position die Gewindemittel in Eingriff und in einer zweiten, unterschiedlichen axialen Position die Gewindemittel außer Eingriff bringt.

Dadurch, daß das Verstellmittel am Gehäuseoberteil angeordnet ist, ergibt sich ein konstruktiv sehr vereinfachter Aufbau, wobei gleichzeitig die Handhabung des Gerätes vereinfacht ist. Insoweit ist auch hervorzuheben, daß das Verstellmittel in axialer Richtung betätigt wird, was die Handhabung weiter begünstigt. Zur Inbetriebnahme beziehungsweise zum Öffnen des Gerätes ist das Verstellmittel äußerst einfach axial von der zweiten in die erste axiale Position beziehungsweise umgekehrt zu verschieben, wodurch die Gewindemittel entweder in oder außer Eingriff gebracht werden. Befinden sich die Gewindemittel in Eingriff, kann der Stempel durch einfache Drehung des Gehäuseoberteils auf das zu schneidende Gut zubewegt werden. Soll das Gerät nach Beendigung des Schneidens geöffnet werden, wird das Verstellmittel durch einfaches axiales Verschieben in die zweite Position überführt, so daß der Stempel zusammen mit dem Gehäuseoberteil von dem Gerät abgezogen werden kann. Umgekehrt wird zum Schneiden des in dem Aufnahmeraum befindlichen Gutes der Stempel mit dem Gehäuseoberteil bei in der zweiten Position befindlichem Verstellmittel in den Aufnahmeraum eingeführt, bis der Stempel unmittelbar oberhalb des zu schneidenden Gutes positioniert ist. Dann wird das Verstellmittel von der zweiten axialen Position in die erste axiale Position überführt und das Gehäuseoberteil in Drehung versetzt, worauf sich der Stempel auf das zu schneidende Gut zubewegt und dieses mittels des Schneidgitters und des Messers, welche relativ zueinander rotieren, in Würfel zerschnitten wird.

Eine erste vorteilhafte Ausgestaltung der Erfindung zeichnet sich dadurch aus, daß die zweite axiale Position des Verstellmittels näher dem Kopf des Gehäuseoberteils angeordnet ist als die erste axiale Position. Gerade zum Reinigen des Gerätes erweist sich diese Maßnahme aus ergonomischer Sicht als besonders günstig, da der Benutzer bei Ausübung einer Zugkraft auf das Gehäuseoberteil das Verstellmittel sozusagen selbsttätig von der ersten axialen Position in die zweite axiale Position überführt und die Gewindemittel außer Eingriff bringt, so daß das Gehäuseoberteil mitsamt dem Stempel einfach von dem Gerät zu entfernen ist. Umgekehrt wird nach dem Befüllen des Aufnahmeraums mit dem zu schneidenden Gut das Gehäuseoberteil mitsamt des Stempels durch Ausübung einer Druckkraft in den Aufnahmeraum eingeführt, worauf das Verstellmittel wiederum quasi selbsttätig von der zweiten Position in die erste axiale Position überführt wird, in der die Gewindemittel miteinander in Eingriff stehen.

Nach einer anderen vorteilhaften Ausgestaltung übergreift das Gehäuseoberteil den Gehäusekörper, wobei die Gewindemittel durch ein Innengewinde des Gehäuseoberteils und ein Außengewinde des Gehäusekörpers gebildet sind. Aufgrund dieser Maßnahme ergibt sich ein äußerst einfacher konstruktiver Aufbau des erfindungsgemäßen Gerätes, welches neben dem Verstellmittel lediglich drei separate Teile aufweist.

Weiterhin hat es sich als äußerst vorteilhaft erwiesen, daß die Verstellmittel in der ersten Position für den Eingriff des Innengewindes in das Außengewinde sorgen und in der zweiten Position eine Längsverschiebung des Gehäuseoberteils bezüglich des Gehäusekörpers zulassen. Aufgrund dieser Maßnahme kann das Gehäuseoberteil nach Befüllen des Aufnahmeraums rasch in eine solche Arbeitsposition überführt werden, in der der Stempel unmittelbar über dem zu zerkleinernden Gut angeordnet ist. Sodann wird das Verstellmittel in die erste Position überführt, in der das Innengewinde und Außengewinde in Eingriff miteinander stehen, wodurch der Stempel bei Drehung des Gehäuseoberteils weiter in den Aufnahmeraum eingeführt und das zu zerkleinernde Gut durch das Schneidgitter sowie das Messer zerschnitten wird.

Eine konstruktiv besonders einfache Ausgestaltung des Verstellmittels ergibt sich dadurch, daß die Gehäusewand des Gehäuseoberteils im Bereich des Innengewindes durch insbesondere leicht auswärts weisende, bevorzugt federelastische Lappen gebildet ist. Durch diese Maßnahme ist es möglich, die Gewindemittel durch ein Einwärtsschwenken der Lappen miteinander in Eingriff und durch ein Auswärtsschwenken der Lappen außer Eingriff zu bringen.

Nach einer anderen äußerst vorteilhaften Ausgestaltung der Erfindung ist das Verstellmittel als auf dem Gehäuseoberteil geführter Ring ausgebildet, der in der ersten axialen Position die Lappen übergreift und einwärts in Richtung des Außengewindes drückt und in einer zweiten axialen Position die Lappen seitlich auswärtschwenken läßt. Befindet sich der Ring in der ersten Position, so stehen Innengewinde und Außengewinde miteinander in Eingriff und es ist das Gehäuseoberteil beziehungsweise der Stempel nicht frei an dem Gehäusekörper axial verschiebbar, sondern lediglich über eine Drehbewegung in einer axiale Vorschubbewegung versetzbar. Befindet sich der Ring jedoch in der zweiten axialen Position, so sind Innengewinde und Außengewinde außer Eingriff, so daß das Gehäuseoberteil frei an dem Gehäusekörper verschiebbar angeordnet ist, ohne daß es hierzu einer Drehbewegung bedarf. Insoweit kann das Gehäuseoberteil beziehungsweise der Stempel bei in der zweiten Position befindlichem Ring rasch in axialer Richtung bewegt werden.

Das Verstellmittel ist wenigstens in einer, bevorzugt in beiden axialen Positionen an dem Gehäuseoberteil feststellbar, beispielsweise verrastbar. Durch diese Maßnahme ist gewährleistet, daß das Verstellmittel nicht unbeabsichtigt von der einen in die andere axiale Position überführt wird.

Die drehbare Lagerung des Innenteils innerhalb des Gehäusekörpers wird dadurch positiv beeinflußt, daß das Querschnittsprofil des Innenteils zumindest abschnittsweise mit dem Querschnittsinnenprofil der Aufnahme des Gehäusekörpers korrespondiert, so daß die Außenwand des Innenteils sich zumindest abschnittsweise an der Innenwand der Aufnahme des Gehäusekörpers abstützt.

Dabei weist der Aufnahmeraum des Innenteils von Vorteil ein unrundes Querschnittsprofil auf.

Von Vorteil besitzt das Gehäuseoberteil einen Stempel mit einem unrunden Querschnittsprofil des Aufnahmeraums des Innenteils angepaßten unrunden Außenprofil, wobei der Stempel in den Aufnahmeraum eintaucht. Durch diese Maßnahme wird aufgrund einer Drehung des Gehäuseoberteils auch das Innenteil sowie das Schneidgitter in Drehung versetzt, wobei sich gleichzeitig der Stempel des Gehäuseoberteils mit fortschreitender Drehung des Gehäuseoberteils immer tiefer in den Aufnahmeraum des Innenteils hineindrückt und somit das in dem Aufnahmeraum befindliche Gut durch das Schneidgitter schiebt, so daß das Gut durch das feststehende Messer weiter zerkleinert wird.

Bevorzugt besitzen der Stempel beziehungsweise der Aufnahmeraum ein im wesentlichen rechteckiges, bevorzugt ein quadratisches Querschnittsprofil, wobei die Eckbereiche der beiden Profile zum Zwecke der einfachen Reinigung leichte Rundungen besitzen können.

Der konstruktiv einfache Aufbau des Gerätes wird dadurch begünstigt, daß das Innenteil und/oder der Gehäusekörper und/oder das Gehäuseoberteil einstückig ausgebildet sind.

Weitere Vorteile und Anwendungsmöglichkeiten der vorliegenden Erfindung ergeben sich aus der nachfolgenden Beschreibung eines Ausführungsbeispieles anhand der Zeichnung.

Es zeigen:
- Figur 1: eine perspektivische Ansicht der Einzelteile eines erfindungsgemäßen Knoblauchschneiders in Art einer Explosionszeichnung,
- Figur 2: den zur Reinigung zerlegten Knoblauchschneider,
- Figur 3: die Ausführung der Figur 2 im Befüllzustand,
- Figur 4: den Knoblauchschneider im zusammengesetzten Zustand und
- Figur 5: das Gehäuseoberteil gemäß Figur 1 mit in Entriegelungsposition befindlichen Verstellmitteln zum axialen Verschieben des Gehäuseoberteils gegenüber dem Gehäusekörper und
- Figur 6: das Gehäuseoberteil gemäß Figur 1 mit in Verriegelungsposition befindlichen Verstellmitteln.

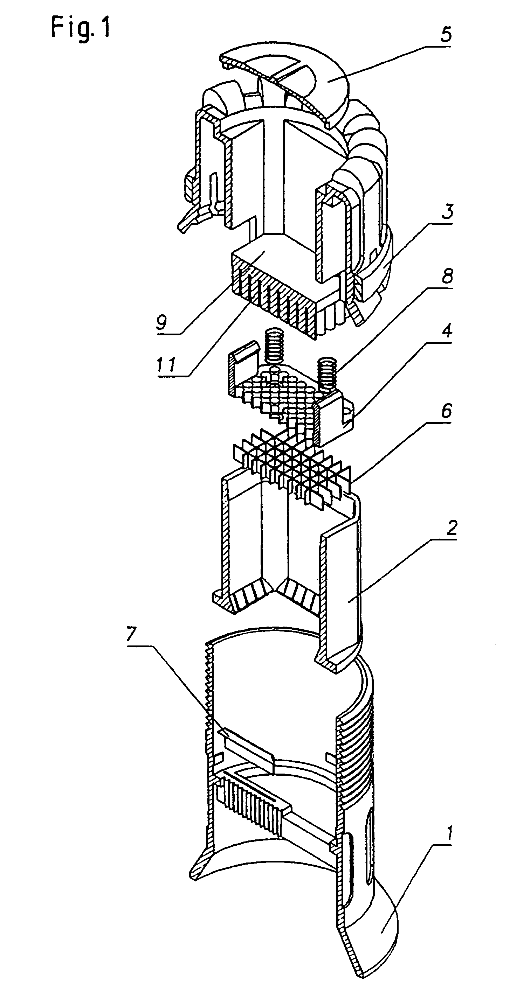

Figur 1 zeigt Einzelteile eines Knoblauchschneiders in Schnitt- und Explosionsdarstellung. Zu erkennen sind als Hauptelemente der Gehäusekörper 1, in den der becherartige Innenteil 2 eingesetzt werden kann, und das Gehäuseoberteil 3. Am Gehäuseoberteil 3 sind die Platte 4 und der Deckel 5 befestigt. In den Innenteil 2 wird das Schneidgitter 6 eingesetzt; in den Gehäusekörper 1 das Messer 7. Die Federn 8 können auf einige der Stifte 11 des Stempels 9 gesetzt werden. Die Platte 4 hat zwei nach oben gerichtete Arme mit nach innen gerichteten Haken, die im zusammengebauten Zustand den Stempel 9 umgreifen. Die Federn 8 drücken dann die Platte 4 vom Stempel 9 weg, während die Haken der Platte 4 diese am Stempel 9 halten.

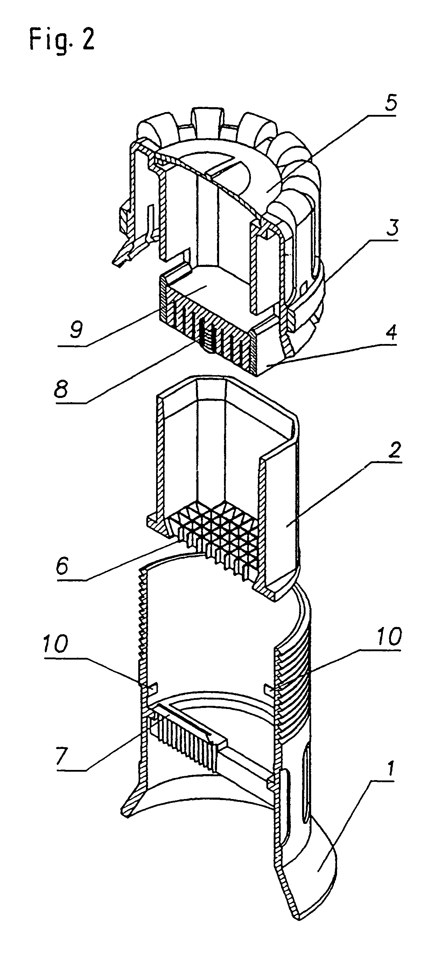

Figur 2 zeigt die Einzelteile der Figur 1 in einem gebrauchsfertigen Zustand, so, wie der Knoblauchschneider zum Beispiel zum Reinigen zerlegt wird, nämlich in die drei Hauptkomponenten Gehäusekörper 1 mit eingesetztem Messer 7, Innenteil 2 mit eingesetztem Schneidgitter 6 und Gehäuseoberteil 3 mit Deckel 5, Stempel 9, Federn 8 und Platte 4. Zu erkennen sind hier weiter die Nasen 10, die etwas oberhalb eines (nicht gesondert dargestellten) Metallrings, der als Gleitelement für den Innenteil 2 dient, angeordnet sind. Schiebt man also den Innenteil 2 aus der in Figur 2 gezeigten Lage über die Nasen 10 hinweg in den Gehäusekörper 1, so liegt der Innenteil 2 auf dem Ring im Gehäusekörper 1 auf. Die Nasen 10 verhindern ein Herausrutschen des Innenkörpers 2 nach oben. Innerhalb des Gehäusekörpers 1 ist der Innenteil 2 dann also drehbar, aber gegen Herausfallen gesichert, gelagert.

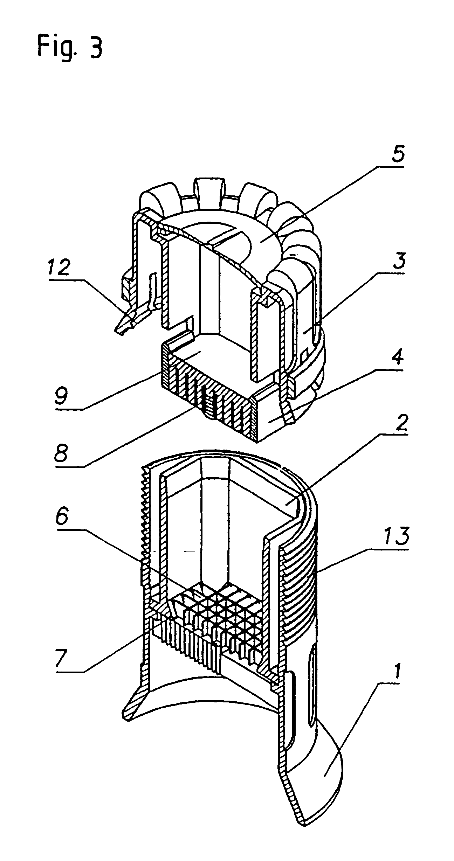

Figur 3 zeigt den erfindungsgemäßen Knoblauchschneider im geöffneten Zustand, also bereit zur Befüllung. Der Innenteil 2 ist nun, wie gerade beschrieben wurde, in den Gehäusekörper 1 eingesetzt. Das Schneidgitter 6 liegt genau über dem Messer 7. Der Knoblauch oder die anderen zu zerkleinernden Gemüse werden nun in den becherartigen Innenraum des Innenkörpers 2 gelegt und liegen damit auf dem Schneidgitter 6.

Zum Zerkleinern des Knoblauchs wird nun das Gehäuseoberteil 3 mit seinem Stempel 9 in den Innenraum des Innenkörpers 2 gesteckt. Bei einem Verdrehen des Oberteils 3 wird so der Innenteil 2 mit Knoblauch und Schneidgitter 6 ebenfalls in Rotation versetzt. Fest gegenüber dem Gehäusekörper 1 steht dagegen der Messerhalter mit dem Messer 7.

Wird dann das Gehäuseoberteil 3 nach unten geschoben und weiter verdreht, greift das am unteren äußeren Rand des Oberteils 3 angeordnete Innengewinde 12 (hier nur ein Gang gezeichnet) in das Außengewinde 13 des Gehäusekörpers 1. Dadurch schraubt sich das Gehäuseoberteil 3 langsam nach unten und preßt den Knoblauch, der sich unterhalb des Stempels 9 und oberhalb des Schneidgitters 6 befindet durch das Schneidgitter 6. Dabei entstehen im Schneidgitter 6 feine Knoblauchstäbchen, die beim Rotieren des Schneidgitters 6 über das Messer 7 in kleine Quader zerschnitten werden.

Wie insbesondere aus Figur 1 zu entnehmen ist, weist der Stempel 9 eine Vielzahl von Stiften 11 auf, denen eine Platte 4 zugeordnet ist, die so viele Löcher enthält, wie Stifte 11 vorhanden sind. Die Platte 4 kann über zwei Klammern an dem Stempel 9 befestigt werden, wie in Figur 2 gezeigt ist. Gezeigt sind weiterhin in Figur 1 zwei (von fünf) Federn 8, welche die Platte 4 vom Stempel 9 wegdrücken. Erst wenn die Platte 4 am Ende des Preßvorgangs auf das Schneidgitter 6 auftrifft, wird die Platte 4 vom Gitter aufgehalten und gegen den Stempel 9 geschoben. Die Federn 8 drücken sich zusammen, die Stifte 11 beginnen, über die Platte 4 herauszuragen. Sie reichen durch die Öffnungen des Schneidgitters 6 und schieben so auch die letzten Knoblauchreste durch das Gitter 6 gegen das darunter rotierende Messe 7. In diesem gedrückten Endzustand sind die oberseitigen Haken der Klammern vom Stempel 9 abgehoben. Öffnet der Benutzer den Knoblauchschneider oder schraubt er das Gehäuseoberteil 3 mit Stempel 9 wieder hoch, so drücken die Federn 8 die Platte 4 wieder nach unten, so daß eine praktisch ebene Fläche, gebildet aus der Platte 4 und den Vorderseiten der Stifte 11 entsteht, die wieder gut reinigbar ist.

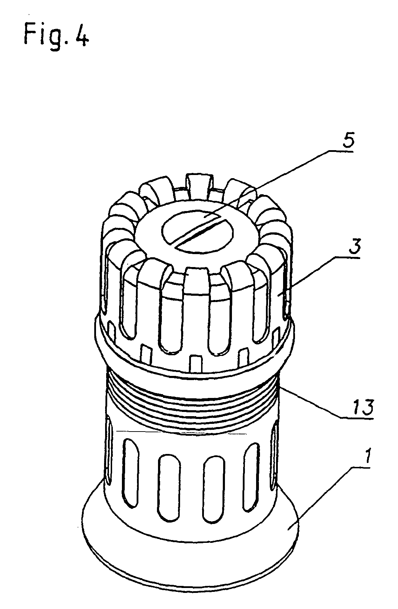

Figur 4 zeigt den Knoblauchschneider in zusammengebautem Zustand. Zu erkennen ist das Gehäuseoberteil 3 mit Deckel 5, welches auf das Außengewinde 13 des Gehäusekörpers 1 aufgeschraubt ist. Der Gehäusekörper 1 hat zur Erhöhung seiner Standfestigkeit einen verbreiterten Fuß.

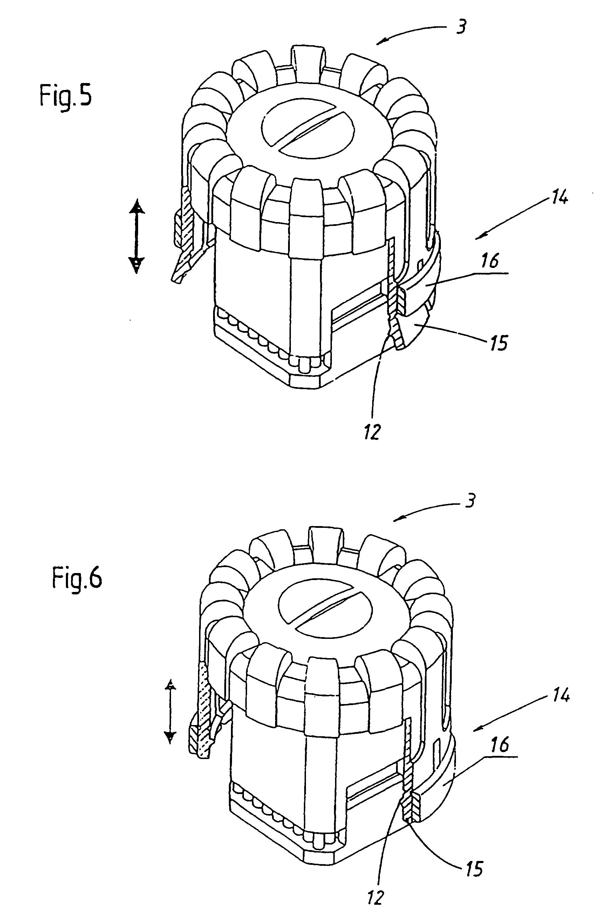

In den Figuren 5 und 6 sind im Detail die Verstellmittel 14 dargestellt, welche am Gehäuseoberteil 3 angeordnet sind, und die in einer ersten Position für den Eingriff des Innengewindes 12 in das Außengewinde 13 sorgen und in einer zweiten Position eine Längsverschiebung des Gehäuseoberteils 3 bezüglich des Gehäusekörpers 1 zulassen. Die Gehäusewand des Gehäuseoberteils 3 ist im Bereich des Innengewindes 12 durch leicht auswärts weisende federelastische Lappen 15 gebildet.

Auf dem Gehäuseoberteil 3 ist ein Ring 16 geführt, der in einer ersten axialen Position (Figur 6) die Lappen 15 übergreift und einwärts in Richtung des Außengewindes 13 drückt und in einer zweiten axialen Position (Figur 5) die Lappen seitlich auswärts schwenken läßt. Befindet sich der Ring 16 in der Stellung gemäß Figur 5, kann das Gehäuseoberteil 3 frei an dem Gehäusekörper 1 in axialer Richtung verschoben werden, da sich Innengewinde 12 und Außengewinde 13 nicht in Eingriff miteinander befinden. Befindet sich der Ring 16 jedoch in der in Figur 6 dargestellten Position, werden die federelastischen Lappen 15 mit dem Innengewinde 12 in das Außengewinde 13 des Gehäusekörpers 1 gedrückt, so daß nun das Gehäuseoberteil 3 beziehungsweise der Stempel 9 lediglich durch eine Drehbewegung des Gehäuseoberteils 3 in axialer Richtung fortbewegt werden kann. Der Ring 16 ist durch Feststellmittel, Rastmittel oder dergleichen in wenigstens einer, bevorzugt in beiden axialen Positionen an dem Gehäuseoberteil 3 feststelloder festlegbar, so daß ein unbeabsichtigtes Verschieben des Ringes 16 aus der einen in die andere Position vermieden ist.

### Bezugszeichenliste

- 1: Gehäusekörper
- 2: Innenkörper
- 3: Gehäuseoberteil
- 4: Platte
- 5: Deckel
- 6: Schneidgitter
- 7: Messer
- 8: Federn
- 9: Stempel
- 10: Nasen
- 11: Stifte
- 12: Innengewinde
- 13: Außengewinde
- 14: Verstellmittel
- 15: Lappen
- 16: Ring

## Patentansprüche

1. Gerät zum Schneiden von Knoblauch, Zwiebeln oder dergleichen Gemüse mit einem Innenteil (2), welcher einen Aufnahmeraum mit einem einends angeordneten Schneidgitter (6) für das zu schneidende Gut aufweist, mit einem einen Stempel (9) aufweisenden Gehäuseoberteil (3), mit dem der Aufnahmeraum anderenends verschließbar ist, mit einem ein Messer (7) aufweisenden Gehäusekörper (1), in dem das Innenteil (2) drehbar aufgenommen ist und mit Gewindemitteln, die in Folge einer Verdrehung des Gehäuseoberteils (3) den Stempel (9) in den Aufnahmeraum des mitdrehenden Innenteil (2) hinein oder aus diesem herausfahren lassen, wobei die Gewindemittel mittels Verstellmitteln (14) in Eingriff oder außer Eingriff bringbar sind, **dadurch gekennzeichnet, daß** das Verstellmittel (14) axial verschiebbar am Gehäuseoberteil (3) angeordnet ist und in einer ersten axialen Position die Gewindemittel in Eingriff und in einer zweiten unterschiedlichen axialen Position die Gewindemittel außer Eingriff bringt.

2. Gerät nach Anspruch 1, **dadurch gekennzeichnet, daß** die zweite axiale Position des Verstellmittels (14) näher dem Kopf des Gehäuseoberteils (3) angeordnet ist als die erste axiale Position.

3. Gerät nach einem der vorhergehenden Ansprüche, **dadurch gekennzeichnet, daß** das Gehäuseoberteil (3) den Gehäusekörper (1) übergreift, wobei die Gewindemittel durch ein Innengewinde (12) des Gehäuseoberteils (3) und ein Außengewinde (13) des Gehäusekörper (1) gebildet sind.

4. Gerät nach einem der vorhergehenden Ansprüche, **dadurch gekennzeichnet, daß** die Verstellmittel (14) in der ersten Position für den Eingriff des Innengewindes (12) in das Außengewinde (13) sorgen und in der zweiten Position eine Längsverschiebung des Gehäuseoberteils (3) bezüglich des Gehäusekörpers (1) zulassen.

5. Gerät nach den Ansprüchen 3 oder 4, **dadurch gekennzeichnet, daß** die Gehäusewand des Gehäuseoberteils (3) im Bereich des Innengewindes (12) durch insbesondere leicht auswärts weisende, bevorzugt federelastische Lappen (15) gebildet ist.

6. Gerät nach einem der vorhergehenden Ansprüche, **dadurch gekennzeichnet, daß** das Verstellmittel (14) als auf dem Gehäuseoberteil (3) geführter Ring (16) ausgebildet ist, der in der ersten axialen Position die Lappen (15) übergreift und einwärts in Richtung des Außengewindes (13) drückt und in einer zweiten axialen Position die Lappen (15) seitlich auswärtsschwenken läßt.

7. Gerät nach einem der vorhergehenden Ansprüche, **dadurch gekennzeichnet, daß** das Verstellmittel (14) in wenigstens einer, bevorzugt in beiden axialen Positionen feststellbar, beispielsweise verrastbar ist.

8. Gerät nach einem der vorhergehenden Ansprüche, **dadurch gekennzeichnet, daß** das Querschnittsaußenprofil des Innenteils (2) zumindest abschnittsweise mit dem Querschnittsinnenprofil der Aufnahme des Gehäusekörpers (1) korrespondiert, so daß die Außenwand des Innenteils (2) sich zumindest abschnittsweise an der Innenwand der Aufnahme des Gehäusekörpers (1) abstützt.

9. Gerät nach einem der vorhergehenden Ansprüchen, **dadurch gekennzeichnet, daß** der Aufnahmeraum des Innenteils (2) ein unrundes Querschnittsprofil aufweist.

10. Gerät nach einem der vorhergehenden Ansprüche, **dadurch gekennzeichnet, daß** das Gehäuseoberteil (3) einen Stempel (9) mit einem dem unrunden Querschnittsprofil des Aufnahmeraums des Innenteils (2) angepaßten unrunden Außenprofil besitzt, wobei der Stempel (9) in den Aufnahmeraum eintaucht.

11. Gerät nach einem der vorhergehenden Ansprüche, **dadurch gekennzeichnet, daß** der Stempel (9) beziehungsweise der Aufnahmeraum im wesentlichen ein rechteckiges, bevorzugt quadratisches Querschnittsprofil besitzen.

12. Gerät nach einem der vorhergehenden Ansprüche, **dadurch gekennzeichnet, daß** das Innenteil (2) und/oder der Gehäusekörper (1) und/oder das Gehäuseoberteil (3) einstückig ausgebildet sind.

## Claims

1. Apparatus for cutting garlic, onions or like vegetables, with an inner member (2) having a receiving space with a cutter grating (6), which is arranged at one end, for the material to be cut, with a housing upper part (3) which comprises a plunger (9) and by which the receiving space is closable at the other end, with a housing body (1) which comprises a knife (7) and in which the inner member (2) is rotatably received, and with threaded means which in consequence of rotation of the housing upper part (3) allows the plunger (9) to move into or out of the receiving space of the co-rotating inner member (2), wherein the threaded means can be brought into or out of engagement by means of adjusting means (14), **characterised in that** the adjusting means (14) is arranged at the housing upper part (3) to be axially adjustable and in a first axial position brings the threaded means into engagement and in a second, different axial position brings the threaded means out of engagement.

2. Apparatus according to claim 1, **characterised in that** the second axial position of the adjusting means (14) is arranged closer to the head of the housing upper part (3) than the first axial position.

3. Apparatus according to one of the preceding claims, **characterised in that** the housing upper part (3) engages over the housing body (1), wherein the threaded means are formed by an internal thread (12) of the housing upper part (3) and an external thread (13) of the housing body (1).

4. Apparatus according to one of the preceding claims, **characterised in that** the adjusting means (14) in the first position ensures engagement of the internal thread (12) in the external thread (13) and in the second position allows a longitudinal displacement of the housing upper part (3) with respect to the housing body (1).

5. Apparatus according to claims 3 or 4, **characterised in that** the housing wall of the housing upper part (3) is formed in the region of the internal thread (12) by, in particular, slightly outwardly pointing, preferably resiliently elastic, lobes (15).

6. Apparatus according to one of the preceding claims, **characterised in that** the adjusting means (14) is constructed as a ring (16) which is guided on the housing upper part (13) and which in the first axial position engages over the lobes (15) and presses these inwardly in the direction of the external thread (13) and in a second axial position allows the lobes (15) to pivot laterally outwardly.

7. Apparatus according to one of the preceding claims, **characterised in that** the adjusting means (14) can be fixed, for example detented, in at least one axial position, preferably in both axial positions.

8. Apparatus according to one of the preceding claims, **characterised in that** the cross-sectional outer profile of the inner member (2) corresponds at least in sections with the cross-sectional internal profile of the receptacle of the housing body (1) so that the outer wall of the inner member (2) is supported at least in sections against the inner wall of the receptacle of the housing body (1).

9. Apparatus according to one of the preceding claims, **characterised in that** the receiving space of the inner member (2) has a non-round cross-sectional profile.

10. Apparatus according to one of the preceding claims, **characterised in that** the housing upper part (3) comprises a plunger (9) with a non-round outer profile matched to the non-round cross-sectional profile of the receiving space of the inner member (2), wherein the plunger (9) dips into the receiving space.

11. Apparatus according to one of the preceding claims, **characterised in that** the plunger (9) or the receiving space has a substantially rectangular, preferably square, cross-sectional profile.

12. Apparatus according to one of the preceding claims, **characterised in that** the inner member (2) and/or the housing body (1) and/or the housing upper part (3) is or are of integral construction.

## Revendications

1. Appareil servant à couper de l'ail, des oignons ou des légumes similaires comportant une partie intérieure (2), qui présente une enceinte de logement comprenant une grille de découpe (6) disposée à une extrémité pour le produit à découper, une partie supérieure de boîtier (3) présentant un poussoir (9) et permettant de fermer l'enceinte de logement au niveau de l'autre extrémité, un corps de boîtier (1) présentant un couteau (7) dans lequel est logée de manière rotative la partie intérieure (2), et des moyens filetés qui, suite à une rotation de la partie supérieure du boîtier (3), font rentrer le poussoir (9) dans ou le font sortir de l'enceinte de logement de la partie intérieure (2) qui tourne avec, les moyens filetés pouvant ainsi être engagés ou dégagés à l'aide d'un moyen de réglage (14), **caractérisé en ce que** le moyen de réglage (14) peut se déplacer axialement au niveau de la partie supérieure du boîtier (3) et, dans une première position axiale, engage les moyens filetés et, dans une deuxième position axiale différente, dégage les moyens filetés.

2. Appareil selon la revendication 1, **caractérisé en ce que** la deuxième position axiale du moyen de réglage (14) est disposée en étant plus proche de la tête de la partie supérieure du boîtier (3) que la première position axiale.

3. Appareil selon l'une quelconque des revendications précédentes, **caractérisé en ce que** la partie supérieure du boîtier (3) fait saillie par rapport au corps du boîtier (1), les moyens filetés étant ainsi formés par un filetage intérieur (12) de la partie supérieure du boîtier (3) et un filetage extérieur (13) du corps du boîtier (1).

4. Appareil selon l'une quelconque des revendications précédentes, **caractérisé en ce que** les moyens de réglage (14), dans une première position, servent à l'engagement dans le filetage intérieur (12) et, dans une deuxième position, permettent un déplacement longitudinal de la partie supérieure du boîtier (3) par rapport au corps du boîtier (1).

5. Appareil selon l'une quelconque des revendications 3 ou 4, **caractérisé en ce que** la paroi du boîtier de la partie supérieure du boîtier (3), dans la zone du filetage intérieur (12), est formée par des languettes (15) qui sont légèrement orientées vers l'extérieur, et de préférence déformables.

6. Appareil selon l'une quelconque des revendications précédentes, **caractérisé en ce que** le moyen de réglage (14) est configuré sous la forme d'un anneau (16) placé sur la partie supérieure du boîtier (3), lequel anneau, dans la première position axiale, fait saillie par rapport aux languettes (15) et appuie vers l'intérieur en direction du filetage extérieur (13) et, dans une deuxième position axiale, fait pivoter les languettes (15) vers l'extérieur sur le côté.

7. Appareil selon l'une quelconque des revendications précédentes, **caractérisé en ce que** le moyen de réglage (14) peut être fixé, par exemple enclenché dans au moins une, et de préférence dans les deux positions axiales.

8. Appareil selon l'une quelconque des revendications précédentes, **caractérisé en ce que** le profil extérieur en coupe de la partie intérieure (2) correspond au moins en partie au profil intérieur en coupe du logement du corps de boîtier (1), de telle sorte que la paroi extérieure de la partie intérieure (2) repose au moins en partie sur la paroi intérieure du logement du corps du boîtier (1).

9. Appareil selon l'une quelconque des revendications précédentes, **caractérisé en ce que** l'enceinte de logement de la partie intérieure (2) présente un profil en coupe ovale.

10. Appareil selon l'une quelconque des revendications précédentes, **caractérisé en ce que** la partie supérieure du boîtier (3) possède un poussoir (9) présentant un profil extérieur ovale adapté au profil en coupe ovale de l'enceinte de logement de la partie intérieure (2), le poussoir (9) étant ainsi enfoncé dans l'enceinte de logement.

11. Appareil selon l'une quelconque des revendications précédentes, **caractérisé en ce que** le poussoir (9), ou l'enceinte de logement, possède un profil en coupe sensiblement rectangulaire, de préférence carré.

12. Appareil selon l'une quelconque des revendications précédentes, **caractérisé en ce que** la partie intérieure (2) et / ou le corps du boîtier (1) et / ou la partie supérieure de boîtier (3) sont formés d'un seul tenant.
